# EUROPÄISCHE PATENTSCHRIFT

(11) **EP 1 802 153 B1**
(45) Veröffentlichungstag und Bekanntmachung des Hinweises auf die Patenterteilung: **23.12.2015**
(21) Anmeldenummer: 05028430.6
(22) Anmeldetag: 23.12.2005
(51) Int. Cl.: H04W 76/00, H04W 72/00, H04W 76/02

(54) **Verfahren zum zusätzlichen Übertragen von Nutzdaten eines Teilnehmers eines Sprachdaten-Gruppenrufverbindungsdienstes in einem Funk-Kommunikationssystem**
Method for additionally transmitting user data for a subscriber of a voice group call service in a radio communications system
Procédé pour la transmission additionelle des données d'utilisateur d'un abonné d'un service d'appel de groupe vocal dans un système de communications radio

(43) Veröffentlichungstag der Anmeldung: 27.06.2007
(73) Patentinhaber: Nokia Solutions and Networks GmbH & Co. KG, 81541 Munich (DE)
(72) Erfinder: Monschau, Jörg, 81377 München (DE); Schrenk, Rudolf, 81377 München (DE)
(74) Vertreter: Weidel, Gottfried

(56) Entgegenhaltungen:
- EP-A- 1 542 443
- US-A- 5 915 225
- US-A1- 2003 100 326

## Beschreibung

Die Erfindung betrifft ein Verfahren zum Übertragen von Daten in einem Funk-Kommunikationssystem, insbesondere in einem für spezifische Anforderungen von Bahnbetreibern angepassten Mobilfunksystem.

Im Hinblick einer Einführung eines einheitlichen Kommunikationssystems wurde 1993 in der internationalen Union der Eisenbahnverwaltungen (UIC, Union Internationale des Chemins de Fer) beschlossen, ein System unter Verwendung einer modifizierten GSM 900-Technologie zu realisieren. Dieses System, als GSM-R (Global System for Mobile Communications for Railway) wurde 1999 von der ETSI (European Telecommunications Standards Institute) und 2000 von EIRENE (European Integrated Railway Radio Enhanced Network) als Standard spezifiziert. Das GSM-R-System nutzt Frequenzbänder unterhalb des GSM 900-Bandes, d.h. für die Übertragung in Aufwärtsrichtung (engl. Uplink) das Frequenzband 876,2 bis 915 MHz, und für die Übertragung in Abwärtsrichtung (engl. Downlink) das Frequenzband 921,2 bis 960 MHz. Die Übertragung innerhalb jeweils 200 kHz breiter Frequenzkanäle erfolgt entsprechend dem GSM-Standard in acht Zeitschlitzen je Rahmen.

Das GSM-R-System ermöglicht sowohl Sprach- als auch Datenverbindungen über leitungsvermittelte Datendienste bis zu einer Datenrate von 14,4 kbit/s. Bedingt durch die hohen Sicherheitsanforderungen des Bahnbetriebs wurden gegenüber den bekannten GSM-Verbindungsverfahren für das GSM-R-System spezielle Dienste eingeführt. Einer dieser Dienste in die so genannte ASCI-Funktionalität (Advanced Speech Call Items), welche Notruf-, Gruppen- als auch Broadcast-Verbindungsdienste zur Verteilung von Informationen unter mehreren Teilnehmern des GSM-R-Netzes zur Verfügung stellen.

Insbesondere während des Rangierbetriebs (engl. Shunting Yard Operation) wird in der Regel ein so genannter Sprachgruppenrufverbindungsdienst VGCS (Voice Group Call Service) verwendet, welcher eine Übertragung von Sprachdaten zwischen den Teilnehmern einer Gruppe entsprechend einer so genannten Push-to-Talk-Funktionalität ermöglicht. Hierzu sei beispielhaft auf die technische Spezifikation 3GPP TS 03.68 V8.6.0 (2005-06), 3rd Generation Partnership Project; Technical Specification Group Core Network and Terminals; Voice Group Call Service (VGCS); Stage 2 (Release 1999), verwiesen. Ergänzend existiert noch der so genannte Broadcastverbindungsdienst VBS (Voice Broadcast Service), mittels dem ausgehend von einem Teilnehmer Sprachdaten zu einer Gruppe von Teilnehmern übertragen werden können.

Aus der EP (EP 1 542 443) ist ein System zum Datenaustausch zwischen mehreren Teilnehmern während einer Gruppenverbindung bekannt. Hierbei wird einem Teilnehmer auf Anfrage ein Kanal sowohl in Aufwärts- als auch in Abwärtsrichtung zugewiesen. Anschließend können Daten übertragen werden. Wenn der Austausch der Daten beendet ist, wird der Teilnehmer in den Gruppenkanal zurückverbunden. Des Weiteren kann ein Teilnehmer erkennen, ob ein Gruppenkanal frei ist, und Daten über den Gruppenkanal übertragen. Während dieser Zeit können die anderen Teilnehmer keinen Austausch von Daten vornehmen.

Aus der US (US 2003/0100326) ist ein System zum Teilen von Orts- und Routeninformationen zwischen Kommunikationseinheiten bekannt. In diesem System werden Daten über einen gemeinsamen Kanal mit den Sprachdaten oder als SMS über einen separaten Datenkanal übertragen.

Diese Dienste unterstützen derzeit ausschließlich eine Übertragung von Sprachdaten. Da jedoch insbesondere im Rangierbetrieb zusätzlich eine Übertragung von ergänzenden Daten, bei spielsweise Rangierkommandos und -bestätigungen, wünschenswert ist, eine derartige Datenübertragung nach dem aktuellen Standard jedoch für den Daten sendenden Teilnehmer eine Auslösung und einen Neuaufbau der Gruppenrufverbindung zur Folge hätte, ist es eine Aufgabe der Erfindung, ein Verfahren , ein Funk-Kommunikationssystem, ein Endgerät sowie eine Basisstation anzugeben, welche eine Datenübertragung parallel zu einer Sprachübertragung in einer Gruppenrufverbindung ermöglichen.

Diese Aufgabe wird durch die erfindungsgemäßen Merkmale der unabhängigen Patentansprüche gelöst. Vorteilhafte Ausgestaltungen der Erfindung sind den abhängigen Patentansprüchen entnehmbar.

Es wird ein Verfahren zum Übertragen von Daten in einem Funk-Kommunikationssystem vorgeschlagen, bei dem zwischen zumindest einer ersten Basisstation (BS1) des Funk-Kommunikationssystems und einem ersten Endgerät (MS1) physikalische Kanäle in Aufwärtsrichtung (UL) und Abwärtsrichtung (DL) für eine Übertragung von Sprachdaten eines Gruppenrufverbindungsdienstes aufgebaut werden. Dabei wird der physikalische Kanal in Aufwärtsrichtung (UL) zwischen dem ersten Endgerät (MS1) und der ersten Basisstation (BS1) für eine Übertragung von Nutzdaten oder ein zusätzlicher physikalischer Kanal in Aufwärtsrichtung verwendet, wobei die erste Basisstation (BS1) über ein Signal die Verfügbarkeit des physikalischen Kanals in Aufwärtsrichtung (UL) für eine Übertragung von Nutzdaten an das erste Endgerät mitteilt.

Das Verfahren ermöglicht vorteilhaft, während einer bestehenden Gruppenrufverbindung parallel zu einer Übertragung von Sprachdaten Nutzdaten zu übertragen, ohne dass die Gruppenrufverbindung für das die Nutzdaten sendende Endgerät ausgelöst und anschließend neu aufgebaut werden muss.

Ein Funk-Kommunikationssystem sowie dessen Komponenten weisen jeweils Einrichtungen für eine Realisierung des Verfahrens auf.

Die Erfindung wird nachfolgend anhand eines Ausführungsbeispiels näher dargestellt. Dabei zeigen
- FIG 1: eine Struktur eines Funk-Kommunikationssystems nach dem GSM-Standard,
- FIG 2: ein Ablaufdiagramm des Signalisierungsaustausches zwischen Komponenten des Funk-Kommunikationssystems nach einem ersten Verfahren, und
- FIG 3: ein Ablaufdiagramm des Signalisierungsaustausches zwischen Komponenten des Funk-Kommunikationssystems nach einem zweiten erfindungsgemäßen Verfahrens.

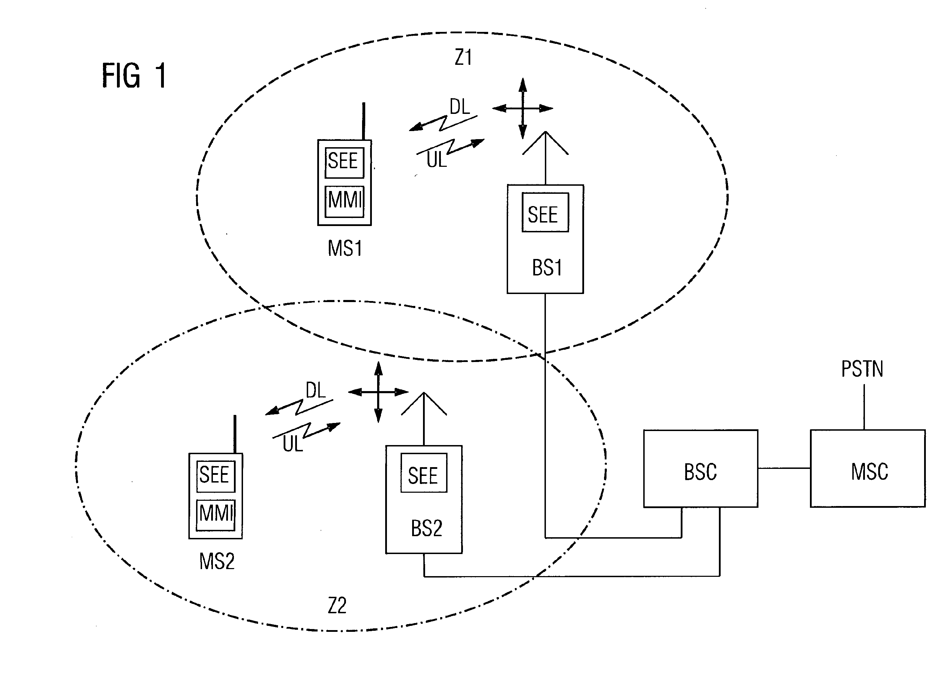

In der FIG 1 ist beispielhaft eine vereinfachte Struktur eines Funk-Kommunikationssystems nach dem bekannten GSM-bzw. GSM-R-Standard dargestellt, wobei eine Realisierung des erfindungsgemäßen Verfahrens in Funk-Kommunikationssystemen nach anderen Standards, beispielsweise UMTS, in gleicher Weise möglich ist.

Die Struktur eines Funk-Kommunikationssystems nach dem GSM-Standard besteht aus einer oder mehreren Mobilvermittlungsstelle MSC (Mobile Switching Center), welche eine Vermittlung von so genannten leitungsvermittelte Verbindungen (CS; Circuit Switched) sowie eine Verwaltung von verschiedenen Funktionalitäten des Systems durchführen. Die Mobilvermittlungsstelle MSC übernimmt zudem die Funktion des Übergangs zu dem öffentlichen Telefonnetz PSTN (Public Switched Telephone Network).

An die Mobilvermittlungsstelle MSC sind eine Vielzahl von Basisstationssteuerungen BSC (Base Station Controller) angeschlossen, in denen unter anderem physikalische Ressourcen der Funkschnittstelle verwaltet werden. An eine Basisstationssteuerung BSC sind wiederum eine Vielzahl von Basisstationen BS1, BS2 (Base Station) angeschlossen, welche unter Nutzung von zugewiesenen physikalischen Ressourcen der Funkschnittstelle Verbindungen zu Endgeräten MS1, MS2 (Mobile Station) aufbauen und auslösen können. Jede Basisstation BS1, BS2 versorgt mit den physikalischen Ressourcen jeweils mindestens ein geographisches Gebiet, welches auch als Funkzelle Z1, Z2 bezeichnet wird. Sowohl die Basisstationen BS1, BS2 als auch die Endgeräte MS1, MS2 weisen jeweils Sende/Empfangseinrichtungen SEE für die Signalübertragung auf der Funkschnittstelle auf. Zudem verfügen die Endgeräte über eine Benutzerschnittstelle MMI (Man Machine Interface) als Schnittstelle zu den Teilnehmern.

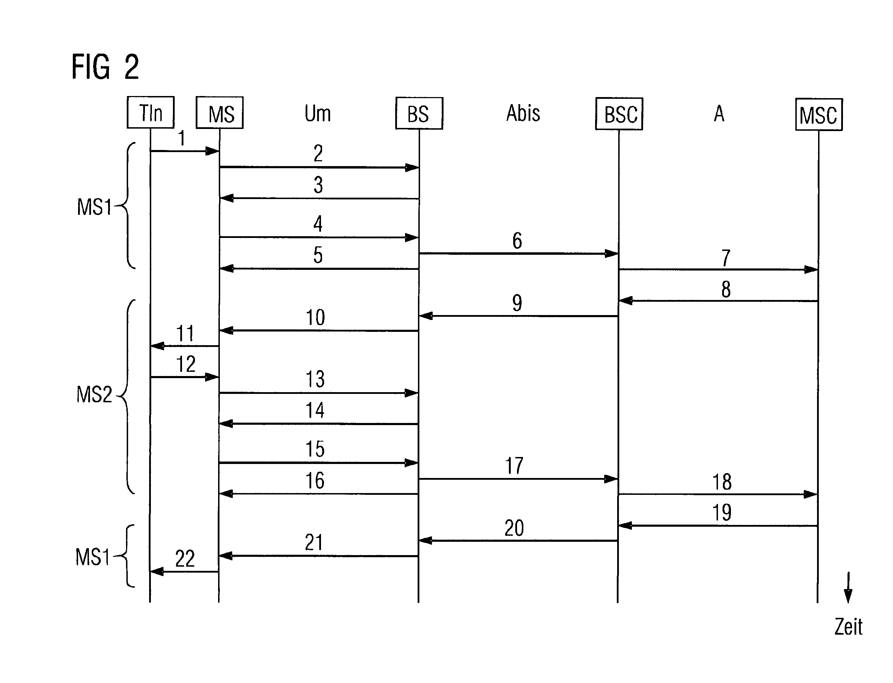

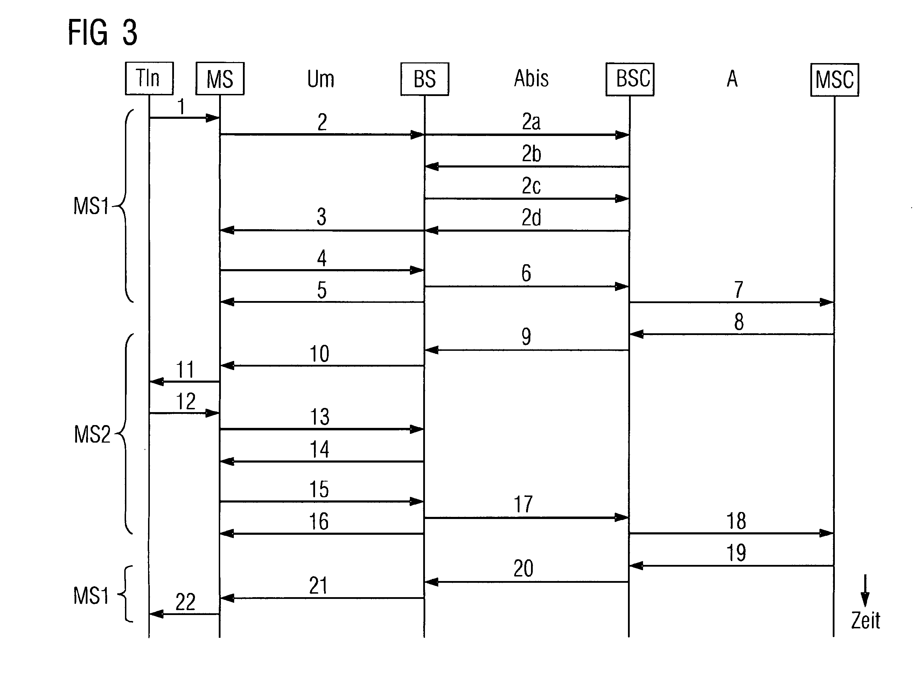

Anhand des Ablaufdiagrammes der FIG 2 und 3 werden nachfolgend beispielhafte Realisierungen des 1,5-Kanalmodell Verfahrens sowie des erfindungsgemäßen Verfahrens beschrieben. Basierend auf der bekannten Netzwerkstruktur eines GSM-R-Systems der FIG 1 sind die einzelnen Schritte in und Signalisierungen zwischen den Komponenten des Systems dargestellt, ohne jedoch auf diese konkrete Ausführungsform beschränkt zu sein. Vielmehr können einzelne Vorgänge auch in jeweils anderen Komponenten des Systems erfindungsgemäß ausgeführt werden. Insbesondere sind unter einem Endgerät sowohl mobile Teilnehmerendgeräte als auch fest installierte Endgeräte, beispielsweise in Zügen, zu verstehen.

Das Beispiel der FIG 2 geht davon aus, dass eine aktive Gruppenrufverbindung zwischen den Teilnehmern Tln bzw. Endgeräten MS1 und MS2, welche nach dem Beispiel der FIG 1 über eine erste BS1 bzw. zweite Basisstation BS2 netzseitig angebunden sind, besteht, über die die Endgeräte MS1, MS2 Sprachdaten austauschen. Hierzu sind zwischen den Endgeräten MS1, MS2 und den Basisstationen BS1, BS2 jeweils physikalische Gruppenrufkanäle in Aufwärts- UL und Abwärtsrichtung DL auf der Funkschnittstelle Um aufgebaut.

Das Beispiel der FIG 2 basiert ferner auf der Verwendung des so genannten 1,5-Kanalmodells, bei dem bei einer Übertragung von Sprachdaten in Aufwärtsrichtung von einem Endgerät zu einer Basisstation eine dedizierte Punkt-zu-Punkt-Verbindung aufgebaut wird. Entsprechend wird der Gruppenrufkanal in Aufwärtsrichtung faktisch nicht zur Übertragung von Sprachdaten verwendet.

Ein erster Teilnehmer Tln, beispielsweise der Rangiergruppenleiter, gibt in einem ersten Schritt 1 über die Benutzerschnittstelle des ersten Endgerätes MS1 den Wunsch einer Übertragung von Nutzdaten, beispielsweise eines Rangierbefehls in Form einer ASCII-Zeichenfolge, ein. Dies kann in Form einer Eingabe einer bestimmten Ziffernfolge, beispielsweise "17", welche stellvertretend für die ASCII-Zeichfolge steht, und Drücken der so genannten Push-To-Send-Taste(PTS) bzw. einer speziell für die Übertragung von Nutzdaten vorgesehenen Taste an dem Endgerät MS1, erfolgen. Nach Verarbeitung dieser Eingabe, in dem ersten Endgerät MS1, insbesondere dem Erkennen, dass es sich um eine Nutzdatenübertragung handelt, sendet dieses in einem zweiten Schritt 2 eine Zugriffsnachricht zu der sie aktuell versorgenden ersten Basisstation BS1. Diese Zugriffsnachricht kann dabei einen Hinweis auf die gewünschte Nutzdatenübertragung als Aufbaugrund, beispielsweise in Form des bekannten ec (establishment cause) -Informationselements mit einem Wert 1, enthalten, um eine netzseitige Unterscheidbarkeit zu beispielsweise einer gewünschten Sprachdatenübertragung als Aufbaugrund zu ermöglichen. Der Hinweis kann alternativ beispielsweise durch Setzen eines Statusbits in der Zugriffsnachricht verwirklicht werden, oder auch durch Verwendung einer speziell für den Aufbau einer Verbindung zur Nutzdatenübertragung ausgebildeten Zugriffsnachricht, mittels der der Basisstation implizit der Aufbaugrund signalisiert wird.

Die erste Basisstation BS1 weist nach Verarbeitung der empfangenen Zugriffsnachricht den Gruppenrufkanal in Aufwärtsrichtung zu und signalisiert diese Zuweisung dem ersten Endgerät MS1 in einem dritten Schritt 3. Damit ist eine so genannte Schicht-2-Verbindung (nach dem ISO-OSI-Schichtenmodell) zwischen der ersten Basisstation BS1 und dem ersten Endgerät MS1 aufgebaut, und das erste Endgerät MS1 wechselt in den so genannten Gruppenübertragungsmodus (GTM; Group Transmit Mode). Anschließend sendet das erste Endgerät MS1 in einem vierten Schritt 4 in dem zugewiesenen Gruppenrufkanal in Aufwärtsrichtung UL eine Nachricht zu der ersten Basisstation BS1, in der sie den von dem ersten Teilnehmer Tln eingegebenen Rangierbefehl, beispielsweise in Form der Ziffernfolge bzw. des ASCII-Textes, sowie eine Information zur Identität des ersten Endgerätes MS1 bzw. des ersten Teilnehmers Tln überträgt. Dies erfolgt beispielsweise in Form einer so genannten SABM-Nachricht, wobei die Identität des ersten Endgerätes MS1 mittels eines bekannten so genannten mi (mobile identity) -Informationselements (IE; Information Element) und der Rangierbefehl mittels eines erfindungsgemäßen sc (shunting command) -Informationselements signalisiert werden.

Nach Empfang der Nachricht löst die erste Basisstation BS1 die Verbindung aus und signalisiert dies in einem fünften Schritt 5 dem ersten Endgerät MS1, beispielsweise unter Verwendung einer bekannten UA Aufwärtsverbindungsfreigabe-Nachricht (uplink release message). Zur Umsetzung dieser Auslösung der Verbindung in dem ersten Endgerät MS1 muss nach einer Ausgestaltung der Erfindung die Schicht-2-Fehlerbehandlung in dem ersten Endgerät MS1 entsprechend adaptiert werden, da das erste Endgerät MS1 nach dem bisherigen Verfahren eine Spiegelung des Inhalts der SABM-Nachricht erwarten, und einen davon abweichenden Inhalt abweisen bzw. nicht berücksichtigen würde. Nach Umsetzung der Auslösung der Verbindung wechselt das erste Endgerät MS1 zurück in den so genannten Gruppenrufempfangsmodus (GRM; Group Receive Mode).

Die erste Basisstation BS1 leitet anschließend in einem sechsten Schritt 6 die empfangene Nachricht des ersten Endgerätes MS1 in einer so genannten ESTIN-Nachricht über die Abis-Schnittstelle zu der der ersten Basisstation BS1 zugeordneten Basisstationssteuerung BSC weiter. Die Basisstationssteuerung BSC fügt dieser Nachricht beispielsweise noch eine Information zu der Funkzelle Z1, in dessen Versorgungsbereich sich das erste Endgerät MS1 aktuell befindet, beispielsweise in Form eines bekannten so genannten ci (cell identifier) -Informationselements, hinzu, und leitet in einem siebten Schritt 7 die gesamten Schicht-3-Informationen in einer Nachricht über die A-Schnittstelle zu der zugeordneten Mobilvermittlungsstelle MSC weiter. Diese Nachricht, beispielhaft als URD (Uplink Request Data) betitelt, kann dabei inhaltlich der für die Sprachdatenübertragung verwendeten bekannten URC-Nachricht (Uplink Request Confirmation) entsprechen, sollte jedoch vorteilhaft in der Mobilvermittlungsstelle MSC von dieser unterscheidbar sein. Die Unterscheidbarkeit gegenüber einer Sprachdatenübertragung kann dabei unter Verwendung der gleichen Nachricht auch implizit, beispielsweise aufgrund der Tatsache, dass weder die Basisstation eine so genannte bekannte Sprecherdetektions-Nachricht (Talker Detection), noch die Basisstationssteuerung eine so genannte bekannte Aufwärtsverbindungsanforderungs-Nachricht (Uplink Request) zuvor gesendet haben, verwirklicht werden.

In der Mobilvermittlungsstelle MSC erfolgt nach Empfang der Nachricht eine entsprechende Verwaltung und Umsetzung der Gruppenruffunktionalität, d.h. insbesondere eine Auswahl des so genannten Gruppenrufgebietes (GCA; Group Call Area), in welcher der Rangierbefehl des ersten Teilnehmers zu den anderen Gruppenmitgliedern ausgesendet werden soll. In dem Beispiel der FIG 1 würde dieses Gruppenrufgebiet den Funkzellen Z1, Z2 der ersten BS1 und zweiten Basisstation BS2 entsprechen.

In einem achten Schritt 8 überträgt die Mobilvermittlungsstelle MSC eine Benachrichtigung (engl. notification) mitsamt dem Rangierbefehl und der Identifikation des ersten Teilnehmers Tln, beispielsweise wiederum in Form von sc- bzw. mi-Informationselementen, zu allen Basisstationssteuerungen des Gruppenrufgebietes. Hierzu wird nach einer Ausgestaltung der Erfindung eine spezielle Nachricht, beispielhaft als DTAP betitelt, auf der A-Schnittstelle verwendet. Da nach dem Beispiel sowohl die erste BS1 als auch die zweite Basisstation BS2 über eine gemeinsame Basisstationssteuerung BSC angebunden sind, wird die Benachrichtigung allein zu der Basisstationssteuerung BSC übertragen.

Die Basisstationssteuerung BSC wiederum leitet in einem neunten Schritt 9 die Benachrichtigung in einer Schicht-2-Nachricht UDTRQ über die Abis-Schnittstelle zu allen Basisstationen des Gruppenrufgebietes, in dem Beispiel der FIG 1 entsprechend zu der ersten BS1 und zweiten Basisstation BS2, weiter. Von den Basisstationen BS1, BS2 wird die Benachrichtigung in einem zehnten Schritt 10 dann unter Nutzung des Gruppenrufkanals in Abwärtsrichtung über die Funkschnittstelle Um in der jeweiligen Funkzelle Z1, Z2 ausgesendet, und von zumindest dem zweiten Endgerät MS2 des zweiten Teilnehmers Tln empfangen. Nach Auswertung der empfangenen Benachrichtigung wird dem zweiten Teilnehmer Tln, beispielsweise dem Zugführer, in einem elften Schritt 11 der Rangierbefehl sowie die Identität des den Befehl sendenden ersten Endgerätes MS1 bzw. des ersten Teilnehmers Tln über die Benutzerschnittstelle MMI optisch bzw. akustisch ausgegeben.

Insbesondere in dem dem Beispiel zugrunde liegenden Arbeitsumfeld des Rangierbetriebs kann eine Bestätigung des Empfangs eines Befehls und Ausgabe der Bestätigung (engl. confirmation) am Endgerät des den Befehl sendenden Endgerätes erforderlich sein.

Entsprechend vorstehend beschriebenem Ablauf wird eine Empfangsbestätigung des zweiten Teilnehmers Tln bzw. zweiten Endgerätes MS2 zu dem ersten Endgerät MS1 übertragen. Dabei bestätigt der zweite Teilnehmer Tln in einem zwölften Schritt 12 über die Benutzerschnittstelle dem zweiten Endgerät MS2 den Empfang. Dies kann beispielsweise durch Drücken einer speziellen so genannten PTC-Taste (Push-to-Confirm) oder auch durch Eingabe einer bestimmten Ziffernfolge, beispielsweise einer "0", welche stellvertretend für eine Rangierbefehlbestätigung steht, und anschließendem Drücken der PTS-Taste erfolgen. Von der Benutzerschnittstelle wird diese Eingabe des zweiten Teilnehmers Tln anschließend derart umgesetzt, dass sie in einem dreizehnten Schritt 13 eine Zugriffsnachricht mit einem Hinweis auf eine Empfangsbestätigung als Aufbaugrund, beispielsweise wiederum in Form des bekannten ec-Informationselementes, diesmal jedoch mit einem Wert "0", über die Funkschnittstelle Um zu der versorgenden zweiten Basisstation BS2 sendet.

Die zweite Basisstation BS2 weist nach Verarbeitung der empfangenen Zugriffsnachricht in einem vierzehnten Schritt 14 den Gruppenrufkanal in Aufwärtsrichtung zu und signalisiert diese Zuweisung dem zweiten Endgerät MS2, womit wiederum eine Schicht-2-Verbindung zwischen der zweiten Basisstation BS2 und dem zweiten Endgerät MS2 aufgebaut ist, und das zweite Endgerät MS2 in den so genannten Gruppenübertragungsmodus wechselt. Nachfolgend sendet das zweite Endgerät MS2 in einem fünfzehnten Schritt 15 in dem zugewiesenen Gruppenrufkanal in Aufwärtsrichtung UL über die Funkschnittstelle Um eine Nachricht zu der zweiten Basisstation BS2, in der sie die von dem zweiten Teilnehmer Tln eingegebene Empfangsbestätigung sowie eine Information zur Identität des zweiten Endgerätes MS2 bzw. des zweiten Teilnehmers Tln überträgt. Dies erfolgt wiederum beispielsweise in Form einer SABM-Nachricht, wobei die Identität des zweiten Endgerätes MS2 mittels eines so genannten mi-Informationselementes und die Rangierbefehlbestätigung mittels eines sc-Informationselementes, beispielsweise mit dem oben angegebenen Wert sc=0, signalisiert werden.

Nach Empfang der Nachricht löst die zweite Basisstation BS2 die Verbindung aus und signalisiert dies in einem sechzehnten Schritt 16 dem zweiten Endgerät MS2, beispielsweise wiederum unter Verwendung einer UA Aufwärtsverbindungsfreigabe-Nachricht. Nach Umsetzung der Auslösung der Verbindung wechselt das zweite Endgerät MS2 zurück in den Gruppenrufempfangsmodus.

Die zweite Basisstation BS2 leitet anschließend in einem siebzehnten Schritt 17 die empfangene Bestätigungsnachricht des zweiten Endgerätes MS2 über die Abis-Schnittstelle zu der der Basisstationssteuerung BSC weiter. Die Basisstationssteuerung BSC fügt der Bestätigungsnachricht wiederum eine Information zu der Funkzelle Z2, in dessen Versorgungsbereich sich das zweite Endgerät MS2 aktuell befindet, in Form eines ci-Informationselementes hinzu, und leitet die gesamten Schicht-3-Informationen in einem achtzehnten Schritt 18 in einer URD-Nachricht über die A-Schnittstelle zu der Mobilvermittlungsstelle MSC weiter.

Nach Empfang der Bestätigungsnachricht und entsprechender Verwaltung und Umsetzung der Gruppenruffunktionalität wird von der Mobilvermittlungsstelle MSC die Bestätigungsnachricht in dem Gruppenrufgebiet, Schritt 19, und von diesen zu allen Basisstationssteuerungen, Schritt 20, sowie schließlich zu dem ersten Endgerät MS1, Schritt 21, übertragen, und über dessen Benutzerschnittstelle dem ersten Teilnehmer Tln ausgegeben, Schritt 22, sodass dieser in Kenntnis des Empfangs des Rangierbefehls durch den zweiten Teilnehmer ist.

Das Beispiel der FIG 3 basiert auf dem vorstehend zu FIG 2 beschriebenen Verfahren, wobei in diesem Fall das so genannte 1-Kanalmodell, bei dem bei einer Übertragung von Sprachdaten in Aufwärtsrichtung von einem Endgerät zu einer Basisstation der Gruppenrufkanal in Aufwärtsrichtung verwendet wird, im Unterschied zu dem 1,5-Kanalmodell somit kein dedizierter Kanal in Aufwärtsrichtung ergänzend aufgebaut wird.

Sobald der Gruppenrufkanal in Aufwärtsrichtung von einem Endgerät zur Übertragung von Sprachdaten belegt ist, wird von den Basisstationen des Gruppenrufgebietes mittels einer Nachricht in Abwärtsrichtung den empfangenden Endgeräten signalisiert, dass der Gruppenrufkanal in Aufwärtsrichtung belegt ist. Dies kann beispielsweise mittels einer so genannten Aufwärtsrichtung-belegt-Nachricht (uplink busy message) erfolgen. Da jedoch lediglich ein Endgerät zu einem Zeitpunkt in Aufwärtsrichtung Sprachdaten übertragen kann, ist faktisch nur der Gruppenkanal in Aufwärtsrichtung in der Funkzelle, in welcher sich der Teilnehmer aktuell befindet, belegt, in allen weiteren Funkzellen des Gruppenrufbereiches ist dieser Kanal jedoch frei.

Somit könnte potenziell der Gruppenkanal in Aufwärtsrichtung von den Endgeräten zur Übertragung von Nutzdaten gemäß dem zu FIG 2 beschriebenen Verfahren verwendet werden. Hierzu wird nach einer Ausgestaltung der Erfindung von den Basisstationen des Gruppenrufbereiches mittels eines neuen Informationselementes in der Aufwärtsrichtung-belegt-Nachricht angezeigt, ob die Belegung des Gruppenrufkanals in Aufwärtsrichtung in der eigenen Funkzelle besteht oder nicht. Dieses neue Informationselement könnte beispielsweise mit "pc" stellvertretend für "potential voice-data conflict situation" betitelt werden, und die Stati "wahr" (true) oder "falsch" (false) einnehmen. Anhand des pc-Informationselementes wird den Endgeräten angezeigt, ob sie den Gruppenrufkanal in Aufwärtsrichtung für eine Übertragung von Nutzdaten verwenden können.

Für das Ablaufdiagramm der FIG 3 sei wiederum angenommen, dass das erste Endgerät MS1 bzw. der erste Teilnehmer Tln einen Rangierbefehl aussenden möchte, von der ersten Basisstation BS1, in dessen ersten Funkzelle Z1 sich der erste Teilnehmer Tln befindet, jedoch durch das Informationselement pc=wahr angezeigt wird, dass der Gruppenrufkanal in Aufwärtsrichtung, beispielsweise aufgrund einer Übertragung von Sprachdaten durch ein nicht dargestelltes drittes Endgerät in diesem Kanal, aktuell belegt ist.

Nach einer Ausgestaltung der Erfindung wird in diesem Fall die Nutzung eines so genannten stand-alone dedicated control channel SDCCH vorgeschlagen. SDCCH sind selbstständige Kanäle in GSM-Systemen, welche in Abwärts- und Aufwärtsrichtung als Steuer- und Signalisierungskanäle aufgebaut werden, und einer Übertragung von Signalisierungen dienen.

In dem Beispiel der FIG 3 unterbricht das erste Endgerät MS1 nach Eingabe des Rangierbefehls durch den ersten Teilnehmer Tln den Empfang von Sprachdaten in dem Gruppenrufkanal in Abwärtsrichtung, und sendet eine Zugriffsnachricht in dem zufallsgesteuerten Zugriffskanal (RACH; Random Access Channel) zu der ersten Basisstation BS1, Schritt 2. Um sicherzustellen, dass die Zugriffsnachricht mit einer höheren Priorität als beispielsweise einer so genannte Location-Update-Anforderung von der ersten Basisstation BS1 behandelt wird, kann das ec-Informationselement einen speziellen Wert annehmen, beispielsweise im Sinne einer "Anforderung zur Übertragung von Daten in Aufwärtsrichtung" (uplink request for sending data).

Ausgelöst durch diesen speziellen Wert des ec-Informationselementes, oder aber auch durch die Kenntnis der ersten Basisstation BS1, dass der Gruppenrufkanal in Aufwärtsrichtung aktuell belegt ist, initiiert die erste Basisstation BS1 den Aufbau eines SDCCH in bekannter Weise nach dem GSM-Standard. Dies ist in FIG 3 durch die nicht weiter beschriebenen Schritte 2a bis 2d dargestellt. In dem dritten Schritt 3 weist die erste Basisstation BS1 dem ersten Endgerät MS1 den aufgebauten SDCCH zu, sodass eine Schicht-2-Verbindung zwischen dem ersten Endgerät MS1 und der ersten Basisstation BS1 etabliert ist. In dem Kanal sendet das erste Endgerät MS1, Schritt 4, eine SABM-Nachricht, welche nach einer Ausgestaltung der Erfindung neben den sc- und mi-Informationselementen vorzugsweise ein rf (group call reference) -Informationselement zur netzseitigen Identifikation der betroffenen Gruppe des Gruppenrufdienstes beinhaltet. Dieses rf-Informationselement kann in gleicher Weise für das Verfahren der FIG 2 verwendet werden. Nach Empfang einer UA-Nachricht, Schritt 5, löst das erste Endgerät MS1 die Verbindung aus, kehrt in den Gruppenrufempfangsmodus (GRM) zurück und fährt mit dem Empfang der Sprachdaten fort. Alle weiteren Schritte und Signalisierungen entsprechen den zu FIG 2 beschriebenen.

## Patentansprüche

1. Verfahren zum Übertragen von Daten in einem Funk-Kommunikationssystem, bei dem
zwischen zumindest einer ersten Basisstation (BS1) des Funk-Kommunikationssystems und einem ersten Endgerät (MS1) ein Gruppenrufkanal in Aufwärtsrichtung (UL) und ein Gruppenrufkanal in Abwärtsrichtung (DL) für eine Übertragung von Sprachdaten eines Gruppenrufverbindungsdienstes aufgebaut werden, und
der Gruppenrufkanal in Aufwärtsrichtung (UL) zwischen dem ersten Endgerät (MS1) und der ersten Basisstation (BS1) für eine Übertragung von Nutzdaten je nach Verfügbarkeit des Gruppenrufkanals verwendet wird,
wobei
die erste Basisstation (BS1) im 1-Kanalmodell über ein Signal die Verfügbarkeit des Gruppenrufkanals in Aufwärtsrichtung (UL) für eine Übertragung von Nutzdaten an das erste Endgerät (MS1) mitteilt und falls der Gruppenrufkanal nicht verfügbar ist, das erste Endgerät (MS1) den Empfang im Gruppenrufkanal in Abwärtsrichtung unterbricht, eine Schicht-2-Verbindung für Kontrollnachrichten mit der Basisstation BS1 etabliert, eine Kontrollnachricht welche Nutzdaten enthält sendet und mit dem Empfang im Gruppenrufkanal fortfährt.

2. Verfahren nach Anspruch 1, bei dem das erste Endgerät (MS1) der ersten Basisstation (BS1) in einer Zugriffsnachricht den Wunsch einer Nutzdatenübertragung signalisiert.

3. Funk-Kommunikationssystem, aufweisend zumindest eine erste Basisstation (BS1) sowie ein erstes Endgerät (MS1), wobei die erste Basisstation (BS1) eine Sende/Empfangseinrichtung (SEE) aufweist, die ausgestaltet ist zum Aufbauen von Gruppenrufkanälen in Aufwärtsrichtung (UL) und Abwärtsrichtung (DL) für eine Übertragung von Sprachdaten eines Gruppenrufverbindungsdienstes,
und wobei das erste Endgerät (MS1) eine Sende/ Empfangseinrichtung (SEE) aufweist, die ausgestaltet ist zum Übertragen von Nutzdaten in dem Gruppenrufkanal in Aufwärtsrichtung (UL), basierend auf der Verfügbarkeit des Gruppenrufkanals, die von der Basisstation (BS1) gesendet wird und falls der Gruppenrufkanal nicht verfügbar ist, das erste Endgerät (MS1) den Empfang im Gruppenrufkanal in Abwärtsrichtung unterbricht, eine Schicht-2-Verbindung für Kontrollnachrichten mit der Basisstation BS1 etabliert, eine Kontrollnachricht welche Nutzdaten enthält sendet und mit dem Empfang im Gruppenrufkanal fortfährt.

4. Endgerät (MS1), aufweisend zumindest eine Sende/ Empfangseinrichtung (SEE) zum Aufbauen von Gruppenrufkanälen in Aufwärtsrichtung (UL) und Abwärtsrichtung (DL) zu einer Basisstation (BS1) des Funk-Kommunikationssystems zum Senden und Empfangen von Sprachdaten eines Gruppenrufverbindungsdienstes,
wobei die Sende/Empfangseinrichtung (SEE) ausgestaltet ist zum Übertragen von Nutzdaten in dem Gruppenrufkanal in Aufwärtsrichtung (UL), basierend auf der Verfügbarkeit des Gruppenrufkanals, die von der Basisstation (BS1) gesendet wird und falls der Gruppenrufkanal nicht verfügbar ist, die Sende/Empfangseinrichtung (SEE) ferner ausgestaltet ist zum Unterbrechen des Empfangs im Gruppenrufkanal in Abwärtsrichtung, zum Etablieren einer Schicht-2-Verbindung für Kontrollnachrichten mit der Basisstation BS1, zum Senden einer Kontrollnachricht welche Nutzdaten enthält und zum Fortfahren des Empfangs im Gruppenrufkanal.

5. Endgerät (MS1) nach Anspruch 4, wobei
die Sende/Empfangseinrichtung (SEE) ausgestaltet ist zum Übertragen der Nutzdaten in Aufwärtsrichtung (UL) zu der Basisstation (BS1) in einem dedizierten Signalisierungskanal bei einer Belegung des Gruppenrufkanals in Aufwärtsrichtung (UL) durch eine Übertragung von Sprachdaten des Gruppenrufverbindungsdienstes.

6. Basisstation (BS1) eines Funk-Kommunikationssystem, aufweisend
zumindest eine Sende/Empfangseinrichtung (SEE) zum Aufbauen von Gruppenrufkanälen in Aufwärtsrichtung (UL) und Abwärtsrichtung (DL) zu zumindest einem Endgerät (MS1) für eine Übertragung von Sprachdaten eines Gruppenrufverbindungsdienstes zu/von dem zumindest einen Endgerät (MS1), wobei die Sende/Empfangseinrichtung (SEE) ausgestaltet ist zum Empfangen von Nutzdaten in dem Gruppenrufkanal in Aufwärtsrichtung (UL) von dem zumindest einen Endgerät (MS1), und wobei die Sende/Empfangseinrichtung (SEE) weiterhin ausgestaltet ist zum Senden eines Signals an das zumindest eine Endgerät (MS1) über die Verfügbarkeit des Gruppenrufkanals in Aufwärtsrichtung (UL) für eine Übertragung von Nutzdaten und falls der Gruppenrufkanal nicht verfügbar ist, die Sende/Empfangseinrichtung (SEE) ferner ausgestaltet ist zum Etablieren einer Schicht-2-Verbindung für Kontrollnachrichten mit dem zumindest einen Endgerät (MS1), zum Empfangen einer Kontrollnachricht welche Nutzdaten enthält und zum Auslösen der Schicht-2-Verbindung.

7. Basisstation (BS1) nach Anspruch 6, wobei
die Sende/Empfangseinrichtung (SEE) ausgestaltet ist zum Aufbauen eines dedizierten Signalisierungskanals bei einer Belegung des Gruppenrufkanals in Aufwärtsrichtung (UL) durch eine Übertragung von Sprachdaten des Gruppenrufverbindungsdienstes, und zum Empfangen der Nutzdaten von dem zumindest einen Endgerät (MS1) in dem dedizierten Signalisierungskanal.

## Claims

1. Method for communicating data in a radio communication system, in which
a group call channel in the uplink direction (UL) and a group call channel in the downlink direction (DL) are set up between at least a first base station (BS1) of the radio communication system and a first terminal device (MS1) for the purpose of transmitting voice data for a group call service, and
the group call channel in the uplink direction (UL) between the first terminal device (MS1) and the first base station (BS1) is used for the purpose of transmitting user data depending on the availability of the group call channel,
wherein
the first base station (BS1) in the 1-channel model uses a signal to communicate the availability of the group call channel in the uplink direction (UL) for the purpose of transmitting user data to the first terminal device (MS1), and if the group call channel is not available then the first terminal device (MS1) interrupts reception on the group call channel in the downlink direction, establishes a layer 2 connection for control messages with the base station (BS1), sends a control message including user data and resumes to receive on the group call channel.

2. Method according to Claim 1, in which the first terminal device (MS1) uses an access message to signal to the first base station (BS1) the need for user data transmission.

3. Radio communication system, having at least a first base station (BS1) and a first terminal device (MS1), wherein the first base station (BS1) has a transmission/reception device (SEE) that is designed to set up group call channels in the uplink direction (UL) and downlink direction (DL) for the purpose of transmitting voice data for a group call service, and wherein the first terminal device (MS1) has a transmission/reception device (SEE) that is designed to transmit user data on the group call channel in the uplink direction (UL), on the basis of the availability of the group call channel, which availability is sent by the base station (BS1), and if the group call channel is not available then the first terminal device (MS1) interrupts reception on the group call channel in the downlink direction, establishes a layer 2 connection for control messages for the base station (BS1), sends a control message including user data and resumes to receive on the group call channel.

4. Terminal device (MS1), having at least one transmission/reception device (SEE) for setting up group call channels in the uplink direction (UL) and the downlink direction (DL) to a base station (BS1) of the radio communication system for sending and receiving voice data for a group call service,
wherein the transmission/reception device (SEE) is designed to transmit user data on the group call channel in the uplink direction (UL) on the basis of the availability of the group call channel, which availability is sent by the base station (BS1), and if the group call channel is not available then the transmission/reception device (SEE) is additionally designed to interrupt reception on the group call channel in the downlink direction, to establish a layer 2 connection for control messages with the base station (BS1), to send a control message including user data and to resume to receive on the group call channel.

5. Terminal device (MS1) according to Claim 4, wherein
the transmission/reception device (SEE) is designed to transmit the user data in the uplink direction (UL) to the base station (BS1) on a dedicated signalling channel if the group call channel in the uplink direction (UL) is busy with transmission of voice data for the group call service.

6. Base station (BS1) in a radio communication system, having
at least one transmission/reception device (SEE) for setting up group call channels in the uplink direction (UL) and the downlink direction (DL) to at least one terminal device (MS1) for the purpose of transmitting voice data for a group call service to/from the at least one terminal device (MS1), wherein the transmission/reception device (SEE) is designed to receive user data on the group call channel in the uplink direction (UL) from the at least one terminal device (MS1), and wherein the transmission/reception device (SEE) is additionally designed to send a signal to the at least one terminal device (MS1) about the availability of the group call channel in the uplink direction (UL) for the purpose of transmitting user data, and if the group call channel is not available then the transmission/reception device (SEE) is additionally designed to establish a layer 2 connection for control messages with the at least one terminal device (MS1),
to receive a control message including user data and to initiate the layer 2 connection.

7. Base station (BS1) according to Claim 6, wherein
the transmission/reception device (SEE) is designed to set up a dedicated signalling channel if the group call channel in the uplink direction (UL) is busy with transmission of voice data for the group call service, and to receive the user data from the at least one terminal device (MS1) on the dedicated signalling channel.

## Revendications

1. Procédé de transmission de données dans un système de communications radio, dans lequel
on établit entre au moins une première station de base (BS1) du système de communications radio et un premier terminal (MS1) un canal d'appel de groupe en direction ascendante (UL) et un canal d'appel de groupe en direction descendante (DL) pour une transmission de données vocales d'un service de liaison d'appel de groupe, et
on utilise le canal d'appel de groupe en direction ascendante (UL) entre le premier terminal (MS1) et la première station de base (BS1) pour une transmission de données utilitaires selon la disponibilité du canal d'appel de groupe,
dans lequel la première station de base (BS1) communique, dans le modèle à 1 canal par un signal, la disponibilité du canal d'appel de groupe en direction ascendante (UL) pour une transmission de données utilitaires au premier terminal (MS1) et, dans le cas où le premier canal d'appel de groupe n'est pas disponible, le premier terminal (MS1) interrompt la réception dans le canal d'appel de groupe en direction descendante, établit une liaison de couche 2 avec la station de base (BS1) pour des messages de contrôle, émet un message de contrôle qui contient des données utilitaires et poursuit la réception dans le canal d'appel de groupe.

2. Procédé selon la revendication 1, dans lequel le premier terminal (MS1) signale à la première station de base (BS1), dans un message d'accès, le souhait d'une transmission de données utilitaires.

3. Système de communications radio, présentant au moins une première station de base (BS1) ainsi qu'un premier terminal (MS1), dans lequel la première station de base (BS1) présente un dispositif d'émission/réception (SEE), qui est configuré pour établir des canaux d'appel de groupe en direction ascendante (UL) et en direction descendante (DL) pour une transmission de données vocales d'un service de liaison d'appel de groupe,
et dans lequel le premier terminal (MS1) présente un dispositif d'émission/réception (SEE), qui est configuré pour transmettre des données utilitaires dans le canal d'appel de groupe en direction ascendante (UL), en se basant sur la disponibilité du canal d'appel de groupe, qui est envoyée par la station de base (BS1) et, dans le cas où le canal d'appel de groupe n'est pas disponible, le premier terminal (MS1) interrompt la réception dans le canal d'appel de groupe en direction descendante, établit une liaison de couche 2 avec la station de base (BS1) pour des messages de contrôle, envoie un message de contrôle qui contient des données utilitaires, et poursuit la réception dans le canal d'appel de groupe.

4. Terminal (MS1), présentant au moins un dispositif d'émission/réception (SEE) pour l'établissement de canaux d'appel de groupe en direction ascendante (UL) et en direction descendante (DL) vers une station de base (BS1) du système de communications radio pour l'émission et la réception de données vocales d'un service de liaison d'appel de groupe,
dans lequel le dispositif d'émission/réception (SEE) est configuré pour transmettre des données utilitaires dans le canal d'appel de groupe en direction ascendante (UL), en se basant sur la disponibilité du canal d'appel de groupe, qui est envoyée par la station de base (BS1) et, dans le cas où le canal d'appel de groupe n'est pas disponible, le dispositif d'émission/réception (SEE) est en outre configuré pour interrompre la réception dans le canal d'appel de groupe en direction descendante, pour établir une liaison à 2 couches avec la station de base (BS1) pour des messages de contrôle, pour envoyer un message de contrôle qui contient des données utilitaires et pour poursuivre la réception dans le canal d'appel de groupe.

5. Terminal (MS1) selon la revendication 4, dans lequel le dispositif d'émission/réception (SEE) est configuré pour transmettre les données utilitaires en direction ascendante (UL) vers la station de base (BS1) dans un canal de signalisation dédié en cas d'occupation du canal d'appel de groupe en direction ascendante (UL) par une transmission de données vocales du service de liaison d'appel de groupe.

6. Station de base (BS1) d'un système de communications radio, présentant au moins un dispositif d'émission/réception (SEE) pour l'établissement de canaux d'appel de groupe en direction ascendante (UL) et en direction descendante (DL) vers au moins un terminal (MS1) pour une transmission de données vocales d'un service de liaison d'appel de groupe vers/depuis ledit au moins un terminal (MS1), dans laquelle le dispositif d'émission/réception (SEE) est configuré pour recevoir des données utilitaires dans le canal d'appel de groupe en direction ascendante (UL) depuis ledit au moins un terminal (MS1), et dans laquelle le dispositif d'émission/réception (SEE) est en outre configuré pour envoyer un signal audit au moins un terminal (MS1) concernant la disponibilité du canal d'appel de groupe en direction ascendante (UL) pour une transmission de données utilitaires et, dans le cas où le canal d'appel de groupe n'est pas disponible, le dispositif d'émission/réception (SEE) est en outre configuré pour établir une liaison de couche 2 avec ledit au moins un terminal (MS1) pour des messages de contrôle, pour recevoir un message de contrôle qui contient des données utilitaires et pour déclencher la liaison de couche 2.

7. Station de base (BS1) selon la revendication 6, dans laquelle le dispositif d'émission/réception (SEE) est configuré pour établir un canal de signalisation dédié en cas d'occupation du canal d'appel de groupe en direction ascendante (UL) par une transmission de données vocales du service de liaison d'appel de groupe, et pour recevoir les données utilitaires dudit au moins un terminal (MS1) dans le canal de signalisation dédié.
